# EUROPEAN PATENT SPECIFICATION

(11) **EP 4 324 951 B1**
(45) Date of publication and mention of the grant of the patent: **25.11.2026**
(21) Application number: 22788162.0
(22) Date of filing: 12.04.2022
(51) Int. Cl.: C22C 38/00, B60B 17/00, C22C 38/50, C21D 8/00, C21D 9/34

(54) **RAILROAD WHEEL**
EISENBAHNRAD
ROUE POUR MATÉRIEL DE CHEMIN DE FER

(30) Priority: 16.04.2021 JP 2021069974
(43) Date of publication of application: 21.02.2024
(73) Proprietor: NIPPON STEEL CORPORATION, Chiyoda-ku Tokyo 100-8071 (JP)
(72) Inventor: MAEJIMA, Taketo, Tokyo 100-8071 (JP); OSAKA, Taro, Tokyo 100-8071 (JP); YAMAMOTO, Yuichiro, Tokyo 100-8071 (JP); MATSUI, Naoki, Tokyo 100-8071 (JP)
(74) Representative: Zimmermann & Partner Patentanwälte mbB
(86) International application number: PCT/JP2022/017582
(87) International publication number: WO 2022/220237

(56) References cited:
- EP-A1- 3 214 201
- WO-A1-2015/190088
- CN-B- 104 325 838
- JP-A- 2012 107 295
- JP-A- H07 308 730
- JP-A- H09 202 937
- JP-A- H09 202 937
- JP-A- S57 143 465
- JP-A- S57 143 465
- JP-A- S63 277 721
- US-A1- 2013 065 079
- US-B2- 9 850 560

## Description

### TECHNICAL FIELD

The present invention relates to a railway wheel.

### BACKGROUND ART

A railway vehicle travels on rails constituting a railway track. A railway vehicle includes a plurality of railway wheels. The railway wheels support the vehicle keeping in contact with the rail and moving on the rail while rotating thereon. The railway wheels wear due to the contact with the rail. Recently, for the purpose of increasing the efficiency of railway transportation, attempts have been made to increase the loading weight on railway vehicles and increase the speeds of railway vehicles. As a result, there is a demand to improve the wear resistance of railway wheels.

Technologies to improve the wear resistance of railway wheels have been proposed in Japanese Patent Application Publication No. 09-202937 (Patent Literature 1), Japanese Patent Application Publication No. 2000-345295 (Patent Literature 2), Japanese Patent Application Publication No. 2012-107295 (Patent Literature 3), and International Application Publication No. WO2015/190088 (Patent Literature 4). Document EP3214201A1 shows another example of a railway wheel.

The railway wheel disclosed in Patent Literature 1 is characterized in that it is an integrated railway vehicle wheel composed of steel having a chemical composition consisting of, in wt%, C: 0.4 to 0.75%, Si: 0.4 to 0.95%, Mn: 0.6 to 1.2%, Cr: 0 to less than 0.2%, P: 0.03% or less, and S: 0.03% or less, with the balance being Fe and other unavoidable impurities, wherein a region from a surface of the wheel tread to a depth of at least 50 mm is composed of a pearlitic structure. Patent Literature 1 states that as a result an integrated railway vehicle wheel can be obtained that simultaneously satisfies requirements for wear resistance and heat-crack resistance that can withstand increased speeds of railways, and that also has a long life.

The railway wheel disclosed in Patent Literature 2 is characterized in that a tread part and a flange part of the railway wheel are composed of a pearlitic structure, a content of carbon (C [wt%]) is 0.5 to 0.8%, and a Vickers hardness Hvt of the tread part and a Vickers hardness Hvf of the flange part are within ranges shown below respectively. Patent Literature 2 states that as a result a railway wheel can be obtained which has a long life overall from the viewpoints of fatigue flaking resistance and wear resistance. $200 \times C + 210 \leq Hvf \leq 357 \times C + 132$ $357 \times C + 72 \leq Hvt < 200 \times C + 210$

The railway wheel disclosed in Patent Literature 3 is characterized by having a chemical composition containing, in mass%, C: 0.65 to 0.84%, Si: 0.02 to 1.00%, Mn: 0.50 to 1.90%, Cr: 0.02 to 0.50%, V: 0.02 to 0.20%, and S: 0.04% or less, with Fn1 represented by Formula (1) below being 34 to 43, and Fn2 represented by Formula (2) below being 25 or less, and the balance is Fe and impurities, wherein the contents of P, Cu, and Ni among the impurities are as follows: P: 0.05% or less, Cu: 0.20% or less, and Ni: 0.20%. Patent Literature 3 states that as a result a railway wheel that is excellent in wear resistance, rolling fatigue resistance, and spalling resistance can be obtained. 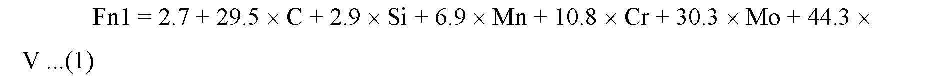 Fn1 = 2.7 + 29.5 × C + 2.9 × Si + 6.9 × Mn + 10.8 × Cr + 30.3 × Mo + 44.3 × V ...(1) 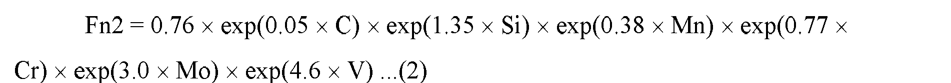 Fn2 = 0.76 × exp(0.05 × C) × exp(1.35 × Si) × exp(0.38 × Mn) × exp(0.77 × Cr) × exp(3.0 × Mo) × exp(4.6 × V) ...(2)

In the above Formula (1) and Formula (2), C, Si, Mn, Cr, Mo and V represent the content in mass% of the corresponding elements, respectively.

The railway wheel disclosed in Patent Literature 4 contains, in mass%, C: 0.65 to 0.84%, Si: 0.1 to 1.5%, Mn: 0.05 to 1.5%, P: 0.025% or less, S: 0.015% or less, Al: 0.001 to 0.08%, and Cr: 0.05 to 1.5%, with the balance being Fe and unavoidable impurities, wherein the microstructure in at least a region extending inward from the tread to a depth of 15 mm is a pearlitic structure, and pearlite lamellar spacing at least in the aforementioned region is 150 nm or less. Patent Literature 4 states that as a result a wheel that is excellent in wear resistance can be obtained.

### CITATION LIST

### PATENT LITERATURE

Patent Literature 1: Japanese Patent Application Publication No. 09-202937
Patent Literature 2: Japanese Patent Application Publication No. 2000-345295
Patent Literature 3: Japanese Patent Application Publication No. 2012-107295
Patent Literature 4: International Application Publication No. WO2015/190088

### SUMMARY OF INVENTION

### TECHNICAL PROBLEM

In this connection, a load corresponding to the loading weight of the railway vehicle is first applied to a railway axle. The load is then transmitted to the respective railway wheels through a hub part that is a contact portion between the railway axle and the railway wheel. Therefore, a large load is applied to the hub part of the railway wheel. Recently, for the purpose of increasing the efficiency of railway transportation, there has been a demand to increase the loading weight of freight cars. Consequently, the hub part of a railway wheel is required to have excellent toughness.

However, previous studies have not given consideration to the toughness of the hub part. This is because it has been recognized that, in a railway wheel, it is important to improve the wear resistance of a rim part that is a part which contacts the rail. In the aforementioned Patent Literatures 1 to 4 also, no consideration is given to the toughness of the hub part.

In Patent Literature 2 it is disclosed that, in order to increase the wear resistance, the hardness at a flange part that is one part of the rim part is increased to an extent that does not impair the toughness, and by this means the propagation of cracks is suppressed. However, the toughness of the hub part is not discussed.

In Patent Literature 4 it is disclosed that the ductility and toughness are improved by making the average pearlite block size 30 µm or less from the tread, which is the face where the railway wheel and the rail contact, to at least a depth of 15 mm inside the wheel. However, the toughness of the hub part is not discussed.

In Patent Literatures 1 and 3, toughness is not discussed. Therefore, there is a possibility that excellent toughness in the hub part cannot be obtained even if the technologies disclosed in Patent Literatures 1 to 4 are used.

An objective of the present disclosure is to provide a railway wheel that is excellent in toughness at a hub part.

### SOLUTION TO PROBLEM

A railway wheel according to the present invention includes the features of claim 1. Particular embodiments of the claimed invention are set out in dependent claim 2.

### ADVANTAGEOUS EFFECT OF INVENTION

The railway wheel of the present invention is excellent in toughness at a hub part.

### BRIEF DESCRIPTION OF DRAWINGS

[FIG. 1] FIG. 1 is a cross-sectional view including a central axis of a railway wheel according to the present embodiment.
[FIG. 2] FIG. 2 is a schematic diagram illustrating measurement points where measurement is performed using an EPMA in a cross section of a hub part among the cross section of the railway wheel illustrated in FIG. 1.
[FIG. 3] FIG. 3 is a cross-sectional view of a hub part for describing a method for arranging measurement regions of the EPMA.
[FIG. 4] FIG. 4 is a schematic diagram illustrating a process for producing a railway wheel.
[FIG. 5] FIG. 5 is a schematic diagram illustrating a process for producing a railway wheel in a case where a punched-portion volume ratio is appropriate.
[FIG. 6] FIG. 6 is a schematic diagram illustrating a process for producing a railway wheel in a case where the punched-portion volume ratio is too small.

### DESCRIPTION OF EMBODIMENT

### [Configuration of railway wheel]

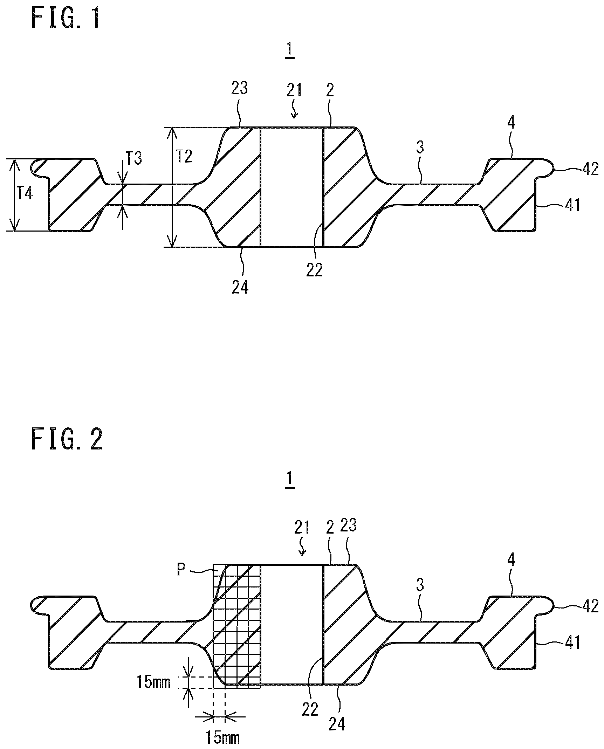

FIG. 1 is a cross-sectional view including a central axis of a railway wheel 1 according to the present embodiment. Referring to FIG. 1, the railway wheel 1 has a disc shape and includes a hub part 2, a web part 3, and a rim part 4. The hub part 2 has a cylindrical shape and is disposed at a middle part in a radial direction (direction perpendicular to the central axis) of the railway wheel 1. The hub part 2 has a through hole 21. A railway axle, not shown, is inserted into the through hole 21. An inner peripheral surface 22 of the hub part 2 forms the through hole 21. The central axis of the through hole 21 coincides with the central axis of the railway wheel 1. In the present description, the central axis direction of the through hole 21 and the railway wheel 1 is also referred to as simply a "central axis direction". A direction that is perpendicular to the central axis of the railway wheel 1 is referred to as the "radial direction of the railway wheel 1". In the present description, the radial direction of the railway wheel 1 is also referred to as simply a "radial direction".

The hub part 2 has the through hole 21. The hub part 2 also has the inner peripheral surface 22 forming the through hole 21, a flange-side surface 23, and a tread-side surface 24. The flange-side surface 23 is connected to the inner peripheral surface 22, and an opening of the through hole 21 is formed in the flange-side surface 23. The tread-side surface 24 is disposed on an opposite side to the flange-side surface 23 and is connected to the inner peripheral surface 22, and an opening of the through hole 21 is formed in the tread-side surface 24. A thickness T2 of the hub part 2 is greater than a thickness T3 of the web part 3.

The rim part 4 is formed at an edge part in the outer circumference of the railway wheel 1. The rim part 4 includes a tread 41 and a flange part 42. The tread 41 is connected to the flange part 42. During use of the railway wheel 1, the tread 41 and the flange part 42 are in contact with a rail surface. A thickness T4 of the rim part 4 is greater than the thickness T3 of the web part 3.

The web part 3 is disposed between the hub part 2 and the rim part 4, and is connected with the hub part 2 and the rim part 4. Specifically, an inner circumferential edge part of the web part 3 is connected with the hub part 2, and an outer circumferential edge part of the web part 3 is connected with the rim part 4. The thickness T3 of the web part 3 is less than the thickness T2 of the hub part 2 and the thickness T4 of the rim part 4.

### [Technical idea of railway wheel of present invention]

The present inventors firstly conducted studies regarding an appropriate chemical composition for increasing the toughness of the hub part 2. The present inventors thought that as long as the content of C is restricted to 0.80% or less, the overall toughness of the railway wheel 1 including the hub part 2 can be enhanced. Therefore the present inventors produced the railway wheel 1 in which the content of C was 0.80% or less, and conducted further studies regarding the toughness of the hub part 2.

The present inventors considered that inclusions in the hub part 2 influence the toughness of the hub part 2. Therefore the present inventors conducted detailed studies regarding inclusions in the hub part 2. However, the present inventors could not identify inclusions that influence the toughness of the hub part 2.

Therefore, the present inventors changed their point of view and conducted a study from a chemical viewpoint. The present inventors cut the hub part 2 along a plane which included the central axis of the railway wheel 1 and which was parallel to the central axis, to thereby obtain a cross section of the hub part 2. In the observation surface, the concentrations of the principal elements were measured using an electron probe microanalyzer (EPMA). The measurement using the EPMA was performed at an arbitrary plurality of places within the cross section of the hub part 2. FIG. 2 is a schematic diagram illustrating the measurement points at which measurement using the EPMA was performed in the cross section of the hub part 2 among the cross section of the railway wheel 1 illustrated in FIG. 1. Referring to FIG. 2, the cross section of the hub part 2 was divided into a plurality of rectangular regions P of 15 mm × 15 mm by a plurality of axial line segments which were parallel to the central axis of the through hole 21 and which were arranged at a pitch of 15 mm in the radial direction from the inner peripheral surface 22 of the through hole 21, and a plurality of radial line segments which were perpendicular to the central axis of the through hole 21 and which were arranged at a pitch of 15 mm in the central axis direction of the through hole 21 from the flange-side surface 23. The concentrations of principal elements in each rectangular region P were measured using the EPMA, and the average concentration in each rectangular region P was determined. As a result it was revealed that there were variations in the C concentration in the hub part 2.

Among the plurality of rectangular regions P, in the majority of the rectangular regions P the average C concentration in the rectangular region P was less than 0.90% by mass. However, some rectangular regions P in which the C concentration was high were included among the plurality of rectangular regions P. In a case where the C concentration was high, the average C concentration within one rectangular region P was 0.90% by mass or more.

The following facts were revealed for the first time by the measurement test using the EPMA conducted by the present inventors. In the hub part 2 of the railway wheel 1, the C concentration is not necessarily constant, and in some cases the C concentration is locally high. In addition, even in the railway wheel 1 having a chemical composition in which the C concentration is 0.80% or less overall, in some cases the C concentration may become 0.90% by mass or more locally in the hub part 2.

Therefore the present inventors investigated the manner in which the toughness changes in a case where the C concentration is locally 0.90% by mass or more. Specifically, the present inventors produced ingots by an ingot-making process using molten steel having chemical compositions shown in Table 1. Here, the C concentrations of the respective steel material numbers were varied in order to reproduce variations in the C concentrations. Note that, a blank space in a column in Table 1 means that the content of the corresponding element was less than the detection limit value. After heating each ingot to 1250°C, hot forging was performed to produce a cylindrical steel material having a diameter of 40 mm and a length of 75 mm. The obtained cylindrical steel material was subjected to a heat treatment that simulated production conditions for the hub part 2 of the railway wheel 1. Specifically, after performing a heating treatment at 950°C for 30 minutes, the cylindrical steel material was cooled at a cooling rate of 0.01°C/s or less.

### [Table 1]

**TABLE 1**

| Steel Material Number | Chemical Composition (Mass%; Balance is Fe and Impurities) | | | | | | | | | | | | | |
|---|---|---|---|---|---|---|---|---|---|---|---|---|---|---|
| | C | Si | Mn | P | S | N | Al | Cu | Ni | Cr | V | Ti | Mo | Nb |
| 1 | 0.71 | 0.29 | 0.79 | 0.014 | 0.010 | 0.0042 | 0.031 | 0.02 | 0.02 | 0.10 | | | 0.02 | |
| 2 | 0.72 | 0.29 | 0.78 | | 0.001 | 0.0057 | 0.030 | | | | | 0.001 | | 0.012 |
| 3 | 0.74 | 0.30 | 0.81 | 0.015 | 0.010 | 0.0039 | 0.002 | | | | | 0.002 | | |
| 4 | 0.84 | 0.30 | 0.81 | 0.001 | 0.002 | 0.0038 | 0.032 | 0.01 | | 0.02 | | | | |
| 5 | 0.84 | 0.30 | 0.79 | 0.015 | 0.010 | 0.0037 | 0.027 | | | 0.10 | 0.08 | | 0.01 | |
| 6 | 0.93 | 0.29 | 0.80 | 0.001 | 0.002 | 0.0042 | 0.032 | | | 0.01 | | | | |
| 7 | 1.00 | 0.30 | 0.80 | 0.001 | 0.002 | 0.0040 | 0.034 | | | | | | | |
| 8 | 1.09 | 0.30 | 0.79 | 0.001 | 0.002 | 0.0040 | 0.036 | 0.01 | 0.01 | | | | | |

Charpy impact values were determined in order to evaluate the toughness of the steel materials of steel material numbers 1 to 8. Specifically, a U-notch test specimen in accordance with JIS Z 2242 (2005) was taken from a center position in a cross section perpendicular to a longitudinal direction of the steel material of each steel material number. A cross section perpendicular to the longitudinal direction of the U-notch test specimen was made a square of 10 mm × 10 mm, and a length in the longitudinal direction of the U-notch test specimen was made 55 mm. The longitudinal direction of the U-notch test specimen was made parallel to the longitudinal direction of the steel material. A U-notch was formed at a central position of the length of the U-notch test specimen (that is, at a central position of the length of 55 mm). A notch depth was set to 2 mm, and a notch bottom radius was set to 1 mm. A Charpy impact test was conducted in the atmosphere at room temperature in accordance with JIS Z 2242 (2005). Charpy impact values (J/cm²) were determined with respect to four U-notch test specimens for each steel material number, and the average value of those four values was adopted as the Charpy impact value (J/cm²) of the relevant steel material number. The results are shown in Table 2.

### [Table 2]

**TABLE 2**

| Steel Material Number | C Concentration (Mass%) | Charpy Impact Value (J/cm²) |
|---|---|---|
| 1 | 0.71 | 12.2 |
| 2 | 0.72 | 13.4 |
| 3 | 0.74 | 10.6 |
| 4 | 0.84 | 7.2 |
| 5 | 0.84 | 7.4 |
| 6 | 0.93 | 5.6 |
| 7 | 1.00 | 5.2 |
| 8 | 1.09 | 4.1 |

Referring to Table 2, it was found that the Charpy impact values (J/cm²) of the steel materials in which the C concentration was 0.90% by mass or more were low compared to the Charpy impact values (J/cm²) of the steel materials in which the C concentration was less than 0.90% by mass. In other words, in a case where the C concentration varied and the C concentration locally became 0.90% by mass or more, the toughness of a portion where the C concentration was 0.90% by mass or more was low compared to a portion where the C concentration was less than 0.90% by mass. On this basis it can be said that, among the plurality of rectangular regions P, in a rectangular region P in which the C concentration is high, the toughness is low compared to surrounding rectangular regions P.

Therefore, the present inventors considered that if variations in the C concentration in the hub part 2 are suppressed and the average C concentration within each rectangular region P is controlled so as to be less than 0.90% by mass, the toughness of the hub part 2 can be further increased.

The railway wheel 1 of the present embodiment that has been completed based on the above findings has the following configuration.
[1] A railway wheel, including:
   a rim part,
   a hub part having a through hole, and
   a web part which is disposed between the rim part and the hub part, and is connected to the rim part and the hub part, wherein
   a chemical composition of the railway wheel consists of, in mass%,
   C: 0.60 to 0.80%,
   Si: 1.00% or less,
   Mn: 0.10 to 1.50%,
   P: 0.050% or less,
   S: 0.030% or less,
   N: 0.0200% or less,
   Al: 0 to 0.500%,
   Cu: 0 to 0.50%,
   Ni: 0 to 0.50%,
   Cr: 0 to 0.50%,
   V: 0 to 0.12%,
   Ti: 0 to 0.010%,
   Mo: 0 to 0.20%, and
   Nb: 0 to 0.050%, with
   the balance being Fe and impurities,
   and wherein
   in a cross section of the hub part obtained when, in a central axis direction of the through hole, the hub part is cut along a plane that includes the central axis,
   when regions of 15 mm × 15 mm defined by a plurality of axial line segments which are parallel to the central axis and which are arranged at a pitch of 15 mm in a radial direction of the railway wheel from an inner peripheral surface of the through hole, and by a plurality of radial line segments which are perpendicular to the central axis and which are arranged at a pitch of 15 mm in the central axis direction from a surface of the hub part that is a surface in which an opening of the through hole is formed are defined as rectangular regions,
   an average C concentration in each rectangular region in the cross section of the hub part is less than 0.90% by mass.
[2] The railway wheel according to [1], containing one or more elements selected from the group consisting of:
   Al: 0.001 to 0.500%,
   Cu: 0.01 to 0.50%,
   Ni: 0.01 to 0.50%,
   Cr: 0.01 to 0.50%,
   V: 0.01 to 0.12%,
   Ti: 0.001 to 0.010%,
   Mo: 0.01 to 0.20%, and
   Nb: 0.010 to 0.050%.

Hereunder, the railway wheel 1 of the present embodiment is described in detail. In the present description, unless otherwise stated, the symbol "%" in relation to an element means mass percent.

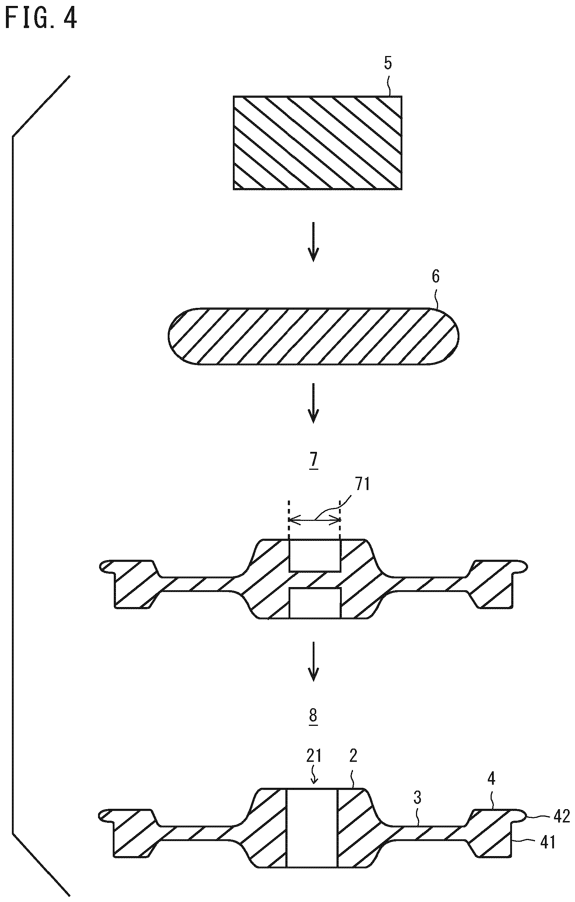

FIG. 4 is a schematic diagram illustrating a process for producing the railway wheel 1. An example of the process for producing the railway wheel 1 is as follows. A disc-shaped steel material for a railway wheel 5 is produced. The disc-shaped steel material for a railway wheel 5 is subjected to hot forging once or a plurality of times in a thickness direction to produce an intermediate product 7 having an external shape of the railway wheel 1. As necessary, hot rolling (wheel rolling) may be performed after the hot forging. A central axis portion 71 of the intermediate product 7 is removed by punching so that an axle can pass therethrough. By this means, an intermediate product 8 having a shape of a railway wheel is formed. The intermediate product 8 is subjected to a heat treatment (tread quenching). In the tread quenching, after heating the intermediate product 8, a cooling fluid is sprayed onto the tread 41 and the flange part 42 of the rim part 4 to rapidly cool the tread 41 and the flange part 42 of the intermediate product 8. By this means, fine pearlite which has high wear resistance is formed in a matrix structure of a near-surface portion of the tread 41. However, in the near-surface portion of the tread 41 after the tread quenching, a quenched layer composed of martensite (or martensite and bainite) is formed in a layer above the fine pearlite. The quenched layer is liable to wear during use of the railway wheel 1. Therefore, after tread quenching, the quenched layer formed at an outermost layer of the tread 41 is removed by cutting. The railway wheel 1 is produced by the foregoing process.

### [Chemical composition of railway wheel]

As illustrated in FIG. 1, the railway wheel 1 of the present embodiment includes the rim part 4, the hub part 2 having the through hole 21, and the web part 3 which is disposed between the rim part 4 and the hub part 2 and which is connected to the rim part 4 and the hub part 2. The chemical composition of the railway wheel 1 of the present embodiment contains the following elements.

### C: 0.60 to 0.80%

Carbon (C) increases the hardness of the steel, and thereby increases the wear resistance of the railway wheel 1. If the C content is less than 0.60%, this effect cannot be obtained even if the contents of other elements are within the range of the present embodiment. On the other hand, if the C content is more than 0.80%, the toughness of the railway wheel 1 will decrease even if the contents of other elements are within the range of the present embodiment. Therefore, the content of C is to be 0.60 to 0.80%. A preferable lower limit of the content of C is 0.63%, more preferably is 0.65%, further preferably is 0.67%, and further preferably is 0.70%. A preferable upper limit of the content of C is 0.79%, more preferably is 0.78%, further preferably is 0.75%, and further preferably is 0.73%.

### Si: 1.00% or less

Silicon (Si) is unavoidably contained. In other words, the content of Si is more than 0%. Si contributes to solid-solution strengthening of ferrite, and thereby increases the hardness of the steel. However, if the content of Si is more than 1.00%, the toughness of the railway wheel 1 will decrease even if the contents of other elements are within the range of the present embodiment. In addition, if the content of Si is more than 1.00%, the hardenability of the steel will be too high, and martensite is liable to be formed. In such a case, the thickness of the quenched layer formed on the tread during the tread quenching increases. As a result, the amount of cutting increases and the yield decreases. Further, if the Si content is more than 1.00%, the rim part 4 will be subjected to unexpected quenching by frictional heat generated between the railway wheel 1 and the brake during use of the railway wheel 1. In such a case, the crack resistance of the steel may decrease. Therefore, the content of Si is to be 1.00% or less. A preferable upper limit of the content of Si is 0.90%, more preferably is 0.80%, further preferably is 0.70%, further preferably is 0.60%, and further preferably is 0.50%. A lower limit of the content of Si is not particularly limited. However, excessively reducing the content of Si will increase the production cost. Therefore, the lower limit of the content of Si is preferably 0.01%, and more preferably is 0.05%. From the viewpoint of increasing the hardness of the steel, the lower limit of the content of Si is further preferably 0.10%, and further preferably is 0.15%.

### Mn: 0.10 to 1.50%

Manganese (Mn) contributes to solid-solution strengthening of ferrite, and thereby increases the hardness of the steel. In addition, Mn forms MnS and thereby improves the machinability of the steel. If the content of Mn is less than 0.10%, even if the contents of other elements are within the range of the present embodiment, these effects cannot be obtained. On the other hand, if the content of Mn is more than 1.50%, even if the contents of other elements are within the range of the present embodiment, the hardenability of the steel will become too high. In such a case, the thickness of the quenched layer increases, and the yield in the production process decreases. Further, the rim part 4 will be subjected to unexpected quenching by frictional heat generated between the railway wheel 1 and the brake during use of the railway wheel 1. In such a case, the crack resistance of the steel may decrease. Therefore, the content of Mn is to be 0.10 to 1.50%. A preferable lower limit of the content of Mn is 0.50%, more preferably is 0.60%, and further preferably is 0.70%. A preferable upper limit of the content of Mn is 1.40%, more preferably is 1.30%, further preferably is 1.20%, further preferably is 1.10%, further preferably is 1.00%, further preferably is 0.95%, and further preferably is 0.90%.

### P: 0.050% or less

Phosphorus (P) is an impurity. P segregates at grain boundaries and decreases the toughness of the steel. Therefore, the content of P is to be 0.050% or less. A preferable upper limit of the content of P is 0.030%, and more preferably is 0.020%. The content of P is preferably as low as possible. The content of P may be 0%. However, excessively reducing the content of P will increase the production cost. Therefore, when ordinary industrial productivity is taken into consideration, a preferable lower limit of the content of P is 0.001%, and more preferably is 0.002%.

### S: 0.030% or less

Sulfur (S) is unavoidably contained. In other words, the content of S is more than 0%. S forms MnS and thereby enhances the machinability of the steel. On the other hand, if the content of S is too high, the toughness of the steel will decrease. Therefore, the content of S is to be 0.030% or less. A preferable upper limit of the content of S is 0.020%. The content of S is preferably as low as possible. However, excessively reducing the content of S will increase the production cost. Therefore, when ordinary industrial productivity is taken into consideration, a preferable lower limit of the content of S is 0.001%, more preferably is 0.002%, and further preferably is 0.005%.

### N: 0.0200% or less

Nitrogen (N) is an impurity that is unavoidably contained. That is, the content of N is more than 0%. If the content of N is more than 0.0200%, even if the contents of other elements are within the range of the present embodiment, AlN will coarsen, thereby decreasing the toughness of the steel. Therefore, the content of N is to be 0.0200% or less. A preferable upper limit of the content of N is 0.0180%, more preferably is 0.0150%, further preferably is 0.0130%, further preferably is 0.0100%, and further preferably is 0.0080%. The content of N is preferably as low as possible. However, excessively reducing the content of N will raise the production cost. Therefore, when ordinary industrial productivity is taken into consideration, a preferable lower limit of the content of N is 0.0010%, more preferably is 0.0030%, and further preferably is 0.0050%.

The balance of the chemical composition of the railway wheel 1 according to the present embodiment is Fe and impurities. Here, the term "impurities" refers to elements which, when industrially producing the railway wheel 1, are mixed in from ore or scrap that is used as a raw material, or from a production environment or the like, and which are allowed within a range that does not adversely affect the railway wheel 1 of the present embodiment. An example of an impurity other than the above-described impurities is O. The content of O is, for example, 0.0070% or less.

### [Regarding optional elements]

The chemical composition of the railway wheel 1 of the present embodiment may further contain one or more elements selected from the group consisting of Al, Cu, Ni, Cr, V, Ti, Mo, and Nb in lieu of a part of Fe.

### Al: 0 to 0.500%

Aluminum (Al) is an optional element and need not be contained. In other words, the content of Al may be 0%. When contained, Al combines with N to form AlN, and refines the grains. The toughness of the steel is enhanced by refining the grains. However, if the content of Al is more than 0.500%, even if the contents of other elements are within the range of the present embodiment, non-metallic inclusions will increase, which will reduce the toughness of the steel. Therefore, the content of Al is to be 0 to 0.500%. A preferable lower limit of the content of Al is more than 0%, more preferably is 0.001%, further preferably is 0.005%, further preferably is 0.010%, further preferably is 0.020%, and further preferably is 0.030%. A preferable upper limit of the content of Al is 0.450%, more preferably is 0.400%, further preferably is 0.350%, further preferably is 0.300%, further preferably is 0.250%, and further preferably is 0.200%. In the present description, the term "content of Al" means the content of acid-soluble Al (sol. Al).

### Cu: 0 to 0.50%

Copper (Cu) is an optional element and need not be contained. In other words, the content of Cu may be 0%. When contained, Cu increases the hardness of the steel by solid-solution strengthening. As a result, the wear resistance of the railway wheel 1 increases. However, if the content of Cu is more than 0.50%, the hot workability of the steel will decrease even if the contents of other elements are within the range of the present embodiment. Therefore, the content of Cu is to be 0 to 0.50%. A preferable lower limit of the content of Cu is more than 0%, more preferably is 0.01%, further preferably is 0.02%, further preferably is 0.05%, and further preferably is 0.10%. A preferable upper limit of the content of Cu is 0.45%, more preferably is 0.40%, further preferably is 0.35%, further preferably is 0.30%, and further preferably is 0.25%.

### Ni: 0 to 0.50%

Nickel (Ni) is an optional element and need not be contained. In other words, the content of Ni may be 0%. When contained, Ni increases the toughness of the steel. However, if the content of Ni is more than 0.50%, even if the contents of other elements are within the range of the present embodiment, the hardenability will be excessively high, and the thickness of the quenched layer after the tread quenching will increase excessively. Therefore, the content of Ni is to be 0 to 0.50%. A preferable lower limit of the content of Ni is more than 0%, more preferably is 0.01%, and further preferably is 0.05%. A preferable upper limit of the content of Ni is 0.45%, more preferably is 0.40%, further preferably is 0.35%, further preferably is 0.30%, further preferably is 0.25%, and further preferably is 0.20%.

### Cr: 0 to 0.50%

Chromium (Cr) is an optional element and need not be contained. In other words, the content of Cr may be 0%. When contained, Cr narrows lamellar spacing of pearlite. This significantly increases the hardness of the pearlite. However, if the content of Cr is more than 0.50%, even if the contents of other elements are within the range of the present embodiment, the hardenability will be excessively high, and the thickness of the quenched layer after the tread quenching will increase excessively. Therefore, the content of Cr is to be 0 to 0.50%. A preferable lower limit of the content of Cr is more than 0%, more preferably is 0.01%, further preferably is 0.02%, further preferably is 0.03%, and further preferably is 0.05%. A preferable upper limit of the content of Cr is 0.45%, more preferably is 0.40%, further preferably is 0.35%, further preferably is 0.30%, further preferably is 0.25%, and further preferably is 0.20%.

### V: 0 to 0.12%

Vanadium (V) is an optional element and need not be contained. In other words, the content of V may be 0%. When contained, V forms any of carbides, nitrides and carbo-nitrides, and thereby contributes to precipitation strengthening of the steel (specifically, ferrite in the steel). As a result, the hardness of the railway wheel 1 increases and the wear resistance is enhanced. However, if the content of V is more than 0.12%, even if the contents of other elements are within the range of the present embodiment, the hardenability will be high, and the thickness of the quenched layer after the tread quenching will increase excessively. Therefore, the content of V is to be 0 to 0.12%. A preferable lower limit of the content of V is more than 0%, more preferably is 0.01%, further preferably is 0.02%, and further preferably is 0.03%. A preferable upper limit of the content of V is 0.11%, more preferably is 0.10%, and further preferably is 0.08%.

### Ti: 0 to 0.010%

Titanium (Ti) is an optional element and need not be contained. In other words, the content of Ti may be 0%. When contained, Ti forms any of carbides, nitrides and carbo-nitrides, and thereby contributes to precipitation strengthening of the steel (specifically, ferrite in the steel). As a result, the hardness of the railway wheel 1 increases and the wear resistance is enhanced. However, if the content of Ti is more than 0.010%, even if the contents of other elements are within the range of the present embodiment, the hardenability will become high, and the thickness of the quenched layer after the tread quenching will increase excessively. Therefore, the content of Ti is to be 0 to 0.010%. A preferable lower limit of the content of Ti is more than 0%, more preferably is 0.001%, further preferably is 0.002%, and further preferably is 0.003%. A preferable upper limit of the content of Ti is 0.008%, more preferably is 0.007%, and further preferably is 0.005%.

### Mo: 0 to 0.20%

Molybdenum (Mo) is an optional element and need not be contained. In other words, the content of Mo may be 0%. When contained, Mo increases the hardness of the steel. As a result, the wear resistance of the railway wheel 1 is enhanced. However, if the content of Mo is more than 0.20%, even if the contents of other elements are within the range of the present embodiment, the hardenability will be excessively high, and the thickness of the quenched layer after the tread quenching will increase excessively. Therefore, the content of Mo is to be 0 to 0.20%. A preferable lower limit of the content of Mo is more than 0%, more preferably is 0.01%, and further preferably is 0.05%. A preferable upper limit of the content of Mo is 0.18%, more preferably is 0.15%, further preferably is 0.12%, further preferably is 0.10%, and further preferably is 0.05%.

### Nb: 0 to 0.050%

Niobium (Nb) is an optional element and need not be contained. In other words, the content of Nb may be 0%. When contained, Nb combines with C to form fine NbC during heating for the tread quenching in the process for producing the railway wheel 1. The fine NbC functions as a pinning particle to suppress coarsening of austenite during heating. For that reason, the prior-austenite grains are kept fine, and thus the hardenability of the steel is kept from becoming high. As a result, formation of the quenched layer in the process for producing the railway wheel 1 is suppressed. Nb also enhances the toughness of the steel material by suppressing the coarsening of prior-austenite grains. On the other hand, if the content of Nb is more than 0.050%, even if the contents of other elements are within the range of the present embodiment, the NbC will coarsen and the toughness of the steel material will, on the contrary, decrease. Therefore, the content of Nb is to be 0 to 0.050%. A preferable lower limit of the content of Nb is more than 0%, more preferably is 0.010%, and further preferably is 0.020%. A preferable upper limit of the content of Nb is 0.030%, and more preferably is 0.020%.

### [Variations in C concentration in hub part]

Variations in the C concentration within the hub part 2 of the railway wheel 1 of the present embodiment are small. Specifically, in a cross section of the hub part 2 that is obtained when the hub part 2 is cut in a central axis direction of the through hole 21 along a plane that includes the central axis, when regions of 15 mm × 15 mm which are defined by a plurality of axial line segments that are parallel to the central axis and that are arranged at a pitch of 15 mm in the radial direction from the inner peripheral surface 22 of the through hole 21, and by a plurality of radial line segments which are perpendicular to the central axis and which are arranged at a pitch of 15 mm in the central axis direction from the surface of the hub part 2 in which an opening of the through hole 21 is formed are defined as rectangular regions p, an average C concentration in each rectangular region P in the cross section of the hub part 2 is less than 0.90% by mass. In the railway wheel 1 of the present embodiment, in the hub part 2 there are no rectangular regions of 15 mm × 15 mm in which the average C concentration is 0.90% by mass or more. Therefore, the toughness is high across the whole area in the hub part 2. As a result, the railway wheel 1 of the present embodiment is excellent in toughness in the hub part 2.

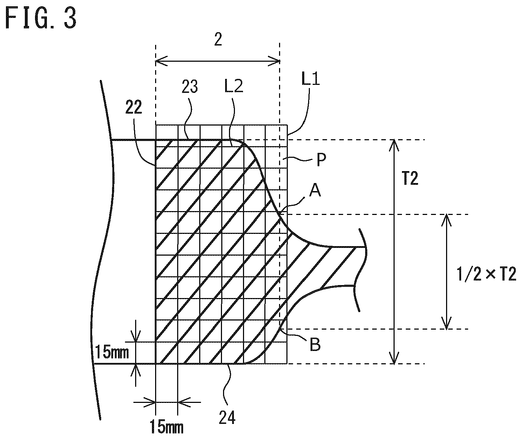

Variations in the C concentration in the hub part 2 are measured by a following method. The railway wheel 1 is cut along a plane which is parallel to the central axis of the railway wheel 1 and which includes the central axis to thereby obtain a cross section of the hub part 2. The cross section of the hub part 2 revealed by the cutting is polished by mechanical polishing or ion milling or the like to obtain a smooth observation surface. The C concentration in the observation surface is measured using an EPMA. The measurement region of the EPMA is set to a rectangle of 15 mm × 15 mm. FIG. 3 is a cross-sectional view of the hub part 2 for describing the measurement method using the EPMA. Referring to FIG. 3, in the cross section of the hub part 2, the hub part 2 is divided into sections by a plurality of axial line segments L1 and a plurality of radial line segments L2. The axial line segments L1 are parallel to the central axis of the through hole 21, and are arranged at a pitch of 15 mm in the radial direction from the inner peripheral surface 22 of the through hole 21. The radial line segments L2 are perpendicular to the central axis of the through hole 21, and are arranged at a pitch of 15 mm in the central axis direction from a surface of the hub part 2 which is a surface in which an opening of the through hole 21 is formed. In FIG. 3, the radial line segments L2 are arranged from the tread-side surface 24. However, the radial line segments L2 may be arranged from the flange-side surface 23. The regions of 15 mm × 15 mm defined by the axial line segments L1 and the radial line segments L2 are defined as the rectangular regions P. The EPMA is used to obtain the average C concentration in each rectangular region P, and to determine variations in the C concentrations. Referring to FIG. 3, in the rectangular regions P which include the outer circumference of the hub part 2, in some cases the hub part 2 is not included in the entire area of the rectangular region P. In such a case, if the area occupied by the hub part 2 in the rectangular region P is 50% or more, the relevant rectangular region P is taken as a measurement target. Note that, in the present description, the term "hub part 2" refers to, in a cross section obtained when the railway wheel 1 is cut in the central axis direction of the railway wheel 1 along a plane that includes the central axis, a region from the inner peripheral surface 22 to a position where a linear distance between two points which are on the outer circumference of the railway wheel 1 and which intersect with a straight line parallel to the central axis of the railway wheel 1 becomes half of the thickness T2 of the hub part 2. In FIG. 3, the two points which are on the outer circumference of the railway wheel 1 and which intersect with a straight line parallel to the central axis of the railway wheel 1 are shown as an intersection point A and an intersection point B, respectively. Referring to FIG. 3, the term "hub part 2" refers to a region which, in a cross section obtained when the railway wheel 1 is cut in the central axis direction of the railway wheel 1 along a plane that includes the central axis, extends from the inner peripheral surface 22 to a position where the linear distance between the intersection points A and B becomes half of the thickness T2 of the hub part 2. If the average C concentration in each rectangular region P is less than 0.90% by mass in all of the rectangular regions P that are the measurement targets, it is determined that variations in the C concentration in the hub part 2 are small.

### [Microstructure of railway wheel]

The microstructure of the rim part 4, the web part 3, and the hub part 2 of the railway wheel 1 of the present embodiment may be a microstructure that is composed substantially of pearlite. Here, the phrase "composed substantially of pearlite" means that the area fraction of pearlite in the microstructure is 95% or more. However, even if pro-eutectoid ferrite precipitates, the pro-eutectoid ferrite will not affect the toughness. Therefore, the microstructure of the rim part 4, the web part 3, and the hub part 2 of the railway wheel 1 of the present embodiment may be a microstructure in which the area fraction of pro-eutectoid ferrite is 0 to 25%, and the balance is pearlite.

The area fraction of pearlite is determined by a following method. Sample are taken from a central position in the thickness direction of the rim part 4, a central position in the thickness direction of the web part 3, and a central position in the thickness direction of the hub part 2, of the railway wheel 1, respectively. The observation surface of each sample is mirror-finished by mechanical polishing. Thereafter, the observation surface is etched using a nital solution (mixed solution of nitric acid and ethanol). A photographic image is generated using an optical microscope with a magnification of 500× for an arbitrary one visual field (200 µm × 200 µm) in the observation surface after etching. The contrasts of the quenched layer (martensite and/or bainite) and pearlite are different from each other. Therefore, the quenched layer and the pearlite in the observation surface are identified based on the contrast. The area fraction of pearlite is determined based on the total area of pearlite that is identified and the area of the observation surface.

As described above, in the railway wheel 1 of the present embodiment, the content of each element in the chemical composition is within the range of the present embodiment, and when, in a cross section of the hub part 2 obtained when the hub part 2 is cut in the central axis direction of the through hole 21 along the plane that includes the central axis, the regions of 15 mm × 15 mm which are defined by the plurality of axial line segments L1 that are parallel to the central axis and that are arranged at a pitch of 15 mm in the radial direction of the railway wheel 1 from the inner peripheral surface 22 of the through hole 21, and by the plurality of radial line segments L2 that are perpendicular to the central axis and are arranged at a pitch of 15 mm in the central axis direction from the surface of the hub part 2 which is the surface in which the opening of the through hole 21 is formed are defined as the rectangular regions P, the average C concentration in each rectangular region P in the cross section of the hub part 2 is less than 0.90% by mass. Therefore, the hub part 2 is excellent in toughness.

### [Method for producing railway wheel]

One example of a method for producing the aforementioned railway wheel 1 will now be described. The present production method includes a process of producing the steel material for a railway wheel 5 (starting material production process), a process of forming the intermediate product 8 having a wheel shape from the steel material for a railway wheel 5 by hot working (forming process), a process of performing a heat treatment (tread quenching) on the formed intermediate product 8 (heat treatment process), and a process of removing the quenched layer by cutting from the tread 41 and the like of the intermediate product 8 after the heat treatment to thereby obtain the railway wheel 1 (cutting process). Each process is described hereunder.

### [Starting material production process]

In the starting material production process, after molten steel having the chemical composition described above is melted using an electric furnace or a converter or the like, the molten steel is cast to obtain a cast material (a cast piece or an ingot). A cast piece may be produced by continuous casting, or an ingot may be produced by casting with a mold.

The cast piece or the ingot is subjected to hot working to produce the steel material for a railway wheel 5 having a desired size. The hot working is, for example, hot forging or hot rolling. In a case of producing the steel material for a railway wheel 5 by hot rolling, for example, the steel material for a railway wheel 5 is produced by a following method. In the hot rolling, for example, a blooming mill is used. The starting material is subjected to blooming by the blooming mill to produce the steel material for a railway wheel 5. In a case where a continuous mill is installed downstream of the blooming mill, the steel material after blooming may be further subjected to hot rolling using the continuous mill to produce the steel material for a railway wheel 5 of an even smaller size. In the continuous mill, a horizontal stand having a pair of horizontal rolls, and a vertical stand having a pair of vertical rolls are alternately arranged in a row. Although not particularly limited, the heating temperature of the heating furnace in the hot rolling is, for example, 1100 to 1350°C. The steel material for a railway wheel 5 is produced by the foregoing production process.

Note that, the steel material for a railway wheel 5 may be a cast material (a cast piece or an ingot). The steel material for a railway wheel 5 may be a steel material obtained by cutting a cylindrical cast material into round slices perpendicularly to the axial direction. That is, the hot working described above may be omitted. The steel material for a railway wheel 5 which is the starting material for the railway wheel 1 is produced by the processes described above. The steel material for a railway wheel 5 is, for example, a starting material that has a cylindrical shape.

### [Forming process]

In the forming process, the prepared steel material for a railway wheel 5 is used to form the intermediate product 8 having a wheel shape by hot working. Since the intermediate product 8 has a wheel shape, the intermediate product 8 includes the hub part 2, the web part 3, and the rim part 4 including the tread 41 and the flange part 42. The hot working is, for example, hot forging, hot rolling (wheel rolling), or the like. As one example, if the forming process described hereunder is performed, variations in the C concentration in the hub part 2 can be made small.

FIG. 4 is a schematic diagram illustrating a process for producing the railway wheel 1. Referring to FIG. 4, a disc-shaped intermediate product 6 is produced by subjecting the steel material for a railway wheel 5 to hot forging. By performing further hot forging on the disc-shaped intermediate product 6, an intermediate product 7 having the external shape of a wheel is produced. As necessary, hot rolling (wheel rolling) may be performed after the hot forging. Next, a central axis portion 71 of the intermediate product 7 having the external shape of a wheel is removed by punching. Thus, an intermediate product 8 having the shape of a wheel is produced.

The present inventors found that variations in the C concentration in the hub part 2 can be suppressed by adjusting the volume of the central axis portion 71 of the intermediate product 7 having the external shape of a wheel (hereunder, referred to as "the central axis portion 71") with respect to the volume of the steel material for a railway wheel 5. Although the reason for this is not clear, for example, it is conceivable that the reason is as follows.

In the present description, the volume of the central axis portion 71 with respect to the volume of the steel material for a railway wheel 5 is referred to as a "punched-portion volume ratio". The punched-portion volume ratio is defined by the following Formula (i). $\left({D 71}^{2}\times T71\right) / \left({D 5}^{2}\times T5\right)$ (i)

In Formula (i), a diameter (cm) of the central axis portion 71 is substituted for D71, a thickness (cm) of the central axis portion 71 is substituted for T71, a diameter (cm) of the steel material for a railway wheel 5 is substituted for D5, and a thickness (cm) of the steel material for a railway wheel 5 is substituted for T5.

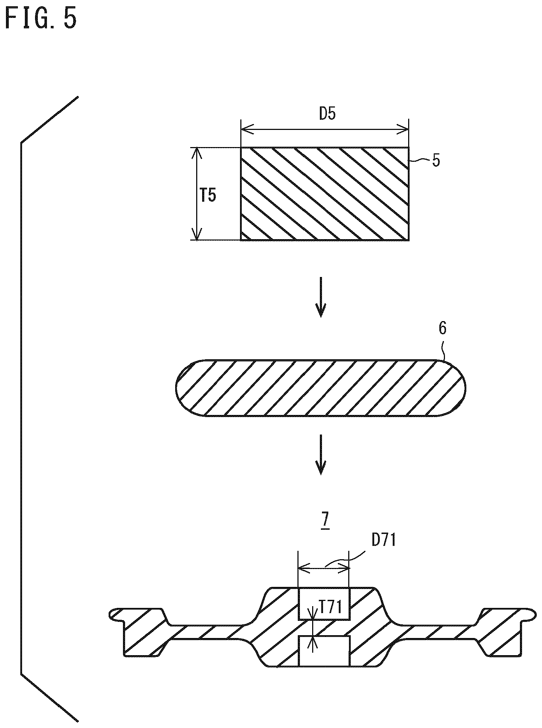

FIG. 5 is a schematic diagram illustrating the process for producing the railway wheel 1 in a case where the punched-portion volume ratio is appropriate. Referring to FIG. 5, the central axis portion of the steel material for a railway wheel 5 is crushed by hot working, and expands and spreads in the radial direction of the steel material for a railway wheel 5. When the punched-portion volume ratio is appropriate, the volume of the central axis portion 71 with respect to the volume of the steel material for a railway wheel 5 is sufficiently large. In this case, strain in the hub part 2 that is caused by the hot working is small.

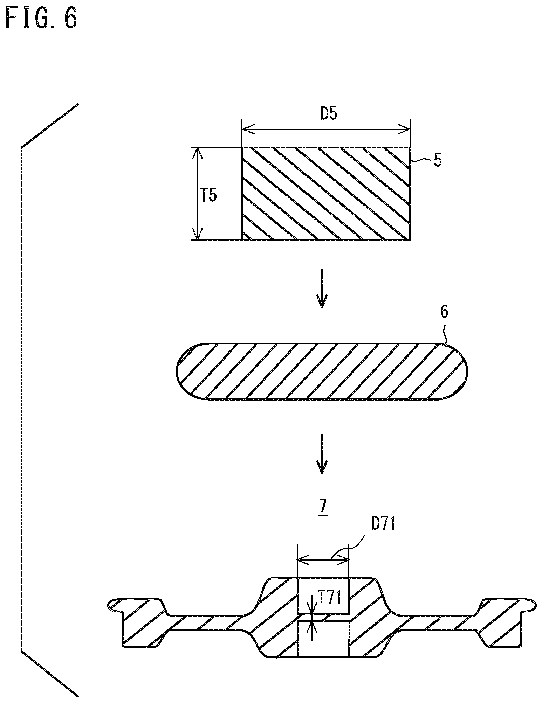

FIG. 6 is a schematic diagram illustrating the process for producing the railway wheel 1 in a case where the punched-portion volume ratio is too small. Referring to FIG. 6, in a case where the punched-portion volume ratio is too small, the volume of the central axis portion 71 with respect to the volume of the steel material for a railway wheel 5 is too small. In this case, in comparison to a case where the punched-portion volume ratio is appropriate, because the hub part 2 is subjected to a stronger compression, the strain in the hub part 2 that occurs due to the hot working is large. It is considered that in regions where strain occurred, local variations arise in the C concentration.

The present inventors conducted a study regarding the punched-portion volume ratio and variations in the C concentration in the hub part 2. Specifically, the present inventors produced railway wheels 1 in which the punched-portion volume ratios were varied, and investigated whether or not there were variations in the C concentration. As a result, as described in Examples which are described later, the present inventors found that, for example, if the punched-portion volume ratio is 0.07% or more, variations in the C concentration in the hub part 2 can be suppressed. In other words, by making the punched-portion volume ratio 0.07% or more, strain in the hub part 2 can be suppressed, and variations in the C concentration can be suppressed.

As described above, in the method for producing the railway wheel 1 of the present disclosure, the punched-portion volume ratio during hot working is adjusted to 0.07% or more. By this means, strain in the hub part 2 is suppressed, and variations in the C concentration in the hub part 2 can be suppressed. As a result, the toughness of the railway wheel 1 increases.

A preferable heating temperature of the steel material for a railway wheel 5 during hot working is 1220°C or more. A method for cooling the intermediate product after the hot working is not particularly limited. The intermediate product may be allowed to cool or may be water-cooled.

### [Heat treatment process]

In the heat treatment process, the formed intermediate product 8 having a wheel shape is subjected to tread quenching. Specifically, the intermediate product 8 after the forming process (hot forging or hot rolling) is reheated to the A_{cm} transformation point or higher (reheating treatment). After heating, the tread 41 and the flange part 42 of the intermediate product 8 are subjected to rapid cooling (tread quenching). For example, the tread 41 and the flange part 42 are rapidly cooled by spraying a cooling medium. The cooling medium is, for example, air, mist, or spray, and is not particularly limited as long as a cooling rate suitable for a desired structure can be obtained. Note that, at the time of the tread quenching, the web part 3 and the hub part 2 are allowed to cool without being water-cooled.

Although in the above description the intermediate product 8 is reheated, the intermediate product 8 after the hot working may be directly subjected to the tread quenching (without being reheated).

The intermediate product 8 after the tread quenching is subjected to tempering as necessary. It is sufficient if the tempering is performed at a well-known temperature for a well-known time. The tempering temperature is, for example, 400 to 600°C.

### [Cutting process]

As described above, while fine pearlite is formed in an outer layer of the tread 41 of the intermediate product 8 after the heat treatment, the quenched layer is formed in the layer thereabove. Since the wear resistance of the quenched layer is low during use of the railway wheel 1, the quenched layer is removed by cutting. It is sufficient if the cutting is performed by a well-known method.

The railway wheel 1 of the present embodiment is produced by the above processes. In the railway wheel 1 of the present embodiment, the content of each element in the chemical composition is within the range of the present embodiment, and when, in a cross section of the hub part 2 obtained when the hub part 2 is cut in the central axis direction of the through hole 21 along the plane that includes the central axis, the regions of 15 mm × 15 mm which are defined by the plurality of axial line segments L1 that are parallel to the central axis and that are arranged at a pitch of 15 mm in the radial direction from the inner peripheral surface 22 of the through hole 21, and by the plurality of radial line segments L2 that are perpendicular to the central axis and that are arranged at a pitch of 15 mm in the central axis direction from the surface of the hub part 2 which is the surface in which the opening of the through hole 21 is formed are defined as the rectangular regions P, the average C concentration in each rectangular region P in the cross section of the hub part 2 is less than 0.90% by mass. Therefore, the hub part 2 is excellent in toughness.

### EXAMPLES

Variations in the C concentration in the hub part with respect to the punched-portion volume ratio were investigated. Specifically, molten steel which consisted of C: 0.71%, Si: 0.30%, Mn: 0.80%, P: 0.010%, S: 0.010%, N: 0.0040%, Al: 0.030%, Cu: 0.02%, Ni: 0.02%, Cr: 0.10%, and Mo: 0.02%, with the balance being Fe and impurities, was produced. The aforementioned molten steel was used to produce ingots (cylindrical steel material having a diameter of 46 cm and a thickness of 50 cm) by an ingot-making process that simulated the starting material production process of the process for producing the railway wheel. Each ingot was heated to 1250°C, and thereafter subjected to hot forging one time to produce a disc-shaped intermediate product having a diameter of 87 cm and a thickness of 14 cm. Each disc-shaped intermediate product was subjected to forging one further time to produce an intermediate product having the external shape of a railway wheel with a diameter of 97 cm, in which the thickness (T4) of the rim part was 15 cm, a width of the rim part was 9 cm, the thickness (T3) of the web part was 5 cm, a width of the web part was 26 cm, the thickness (T2) of the hub part was 7 cm, and a width of the hub part was 20 cm. Intermediate products having the shape of a railway wheel were produced in which the punched-portion volume ratio was made 0.20% or 0.05%, and whether or not there were variations in the C concentration in the hub part was investigated.

The intermediate products having the shape of a railway wheel and in which the punched-portion volume ratios had been varied were subjected to the tread quenching, after which the quenched layer was cut off to produce the railway wheels. Each of the obtained railway wheels was cut in the central axis direction of the through hole along the plane that included the central axis. The cross section of the hub part was then polished by mechanical polishing to obtain a smooth observation surface. The cross section of the hub part was divided into sections by the plurality of axial line segments which were parallel to the central axis of the through hole and which were arranged at a pitch of 15 mm in the radial direction from the inner peripheral surface of the through hole, and by the plurality of radial line segments which were perpendicular to the central axis of the through hole and which were arranged at a pitch of 15 mm in the central axis direction from the surface of the hub part that is the surface in which the opening of the through hole was formed. The regions of 15 mm × 15 mm thus divided were defined as the rectangular regions P. The average C concentration in each rectangular region P was measured using the EPMA. The highest C concentration among the obtained average C concentrations is shown in the column "Maximum C Concentration (mass%)" in Table 3.

### [Table 3]

**TABLE 3**

| Test Number | Punched-portion Volume Ratio (%) | Maximum C Concentration (Mass%) |
|---|---|---|
| 1 | 0.20 | 0.84 |
| 2 | 0.05 | 0.93 |

### [Charpy impact test]

A Charpy impact test was conducted to examine the relation between the C concentration and the toughness. Steel materials having the chemical compositions shown in Table 4 were prepared. A blank space in a column in Table 4 means that the content of the corresponding element was less than the detection limit value. The contents of C in the respective steel materials were adjusted to match the maximum C concentration in Table 3. The shape of each steel material was made a round bar with a diameter of 20 mm and a length of 125 mm.

### [Table 4]

**TABLE 4**

| Test Number | Chemical Composition (Mass%; Balance is Fe and Impurities) | | | | | | | | |
|---|---|---|---|---|---|---|---|---|---|
| | C | Si | Mn | P | S | N | Al | Cu | Cr |
| 1 | 0.84 | 0.30 | 0.81 | 0.001 | 0.002 | 0.0038 | 0.032 | 0.01 | 0.02 |
| 2 | 0.93 | 0.29 | 0.80 | 0.001 | 0.002 | 0.0042 | 0.032 | | 0.01 |

Charpy impact values were determined in order to evaluate the toughness of the steel materials of Test Numbers 1 and 2. Specifically, a U-notch test specimen in accordance with JIS Z 2242 (2005) was taken from a center position in a cross section perpendicular to the longitudinal direction of the steel material of each steel material number. The cross section perpendicular to the longitudinal direction of the U-notch test specimen was made a square of 10 mm × 10 mm, and the length in the longitudinal direction of the U-notch test specimen was made 55 mm. The longitudinal direction of the U-notch test specimen was made parallel to the longitudinal direction of the steel material. A U-notch was formed at a central position of the length of the U-notch test specimen (that is, at a central position of the length of 55 mm). The notch depth was set to 2 mm, and the notch bottom radius was set to 1 mm. A Charpy impact test was conducted in the atmosphere at room temperature in accordance with JIS Z 2242 (2005). Charpy impact values (J/cm²) were determined with respect to four U-notch test specimens for each test number, and the average value of those four values was adopted as the Charpy impact value (J/cm²) of the relevant test number. The results are shown in Table 5.

### [Table 5]

**TABLE 5**

| Test Number | Punched-portion Volume Ratio (%) | Maximum C Concentration (Mass%) | Charpy Impact Value (J/cm²) |
|---|---|---|---|
| 1 | 0.20 | 0.84 | 7.2 |
| 2 | 0.05 | 0.93 | 5.6 |

### [Evaluation results]

Referring to Table 5, in Test Number 1 the punched-portion volume ratio was 0.07% or more. Therefore, variations in the C concentration in the hub part were suppressed. Specifically, in the cross section of the hub part obtained when the hub part was cut in the central axis direction of the through hole along the plane including the central axis, when the regions of 15 mm × 15 mm that were defined by the plurality of axial line segments which were parallel to the central axis and which were arranged at a pitch of 15 mm in the radial direction from the inner peripheral surface of the through hole, and by the plurality of radial line segments which were perpendicular to the central axis and which were arranged at a pitch of 15 mm in the central axis direction from the surface of the hub part that is a surface in which the opening of the through hole was formed were defined as the rectangular regions P, the average C concentration in each rectangular region P in the cross section of the hub part was less than 0.90% by mass. In addition, the Charpy impact value in a case where the C concentration was less than 0.90% by mass was 6.0 (J/cm²) or more. That is, in the railway wheel of Test Number 1, because the average C concentration in each rectangular region P in the hub part was less than 0.90% by mass, the Charpy impact value was 6.0 (J/cm²) or more across the whole area in the hub part. Therefore, the hub part of the railway wheel produced according to the conditions of Test Number 1 had excellent toughness.

On the other hand, in Test Number 2, the punched-portion volume ratio was less than 0.07%. Therefore, variations in the C concentration of the hub part could not be suppressed. Specifically, in the cross section of the hub part obtained when the hub part was cut in the central axis direction of the through hole along the plane including the central axis, when the regions of 15 mm × 15 mm that were defined by the plurality of axial line segments which were parallel to the central axis and which were arranged at a pitch of 15 mm in the radial direction from the inner peripheral surface of the through hole, and by the plurality of radial line segments which were perpendicular to the central axis and which were arranged at a pitch of 15 mm in the central axis direction from the surface of the hub part that is the surface in which the opening of the through hole was formed were defined as the rectangular regions P, the rectangular regions P in the cross section of the hub part included the rectangular region P where the average C concentration was 0.90% by mass or more. In addition, the Charpy impact value in a case where the C concentration was 0.90% by mass or more was 6.0 (J/cm²) or less. That is, in the rectangular region P where the average C concentration was 0.90% by mass or more, the Charpy impact value was 6.0 (J/cm²) or less. Therefore, the hub part of the railway wheel produced according to the conditions of Test Number 2 did not have excellent toughness.

### REFERENCE SIGNS LIST

1 Railway wheel
2 Hub part
3 Web part
4 Rim part
21 Through hole
22 Inner peripheral surface
23 Flange-side surface
24 Tread-side surface
41 Tread
42 Flange part
L1 Axial line segment
L2 Radial line segment

## Claims

1. A railway wheel (1), comprising:
a rim part (4),
a hub part (2) having a through hole (21), and
a web part (3) which is disposed between the rim part and the hub part, and is connected to the rim part and the hub part,
a chemical composition of the railway wheel consists of, in mass%,
C: 0.60 to 0.80%,
Si: 1.00% or less,
Mn: 0.10 to 1.50%,
P: 0.050% or less,
S: 0.030% or less,
N: 0.0200% or less,
Al: 0 to 0.500%,
Cu: 0 to 0.50%,
Ni: 0 to 0.50%,
Cr: 0 to 0.50%,
V: 0 to 0.12%,
Ti: 0 to 0.010%,
Mo: 0 to 0.20%, and
Nb: 0 to 0.050%, with
the balance being Fe and impurities,
and **characterized in that**
in a cross section of the hub part obtained when, in a central axis direction of the through hole, the hub part is cut along a plane that includes the central axis,
when regions of 15 mm × 15 mm defined by a plurality of axial line segments (L1) which are parallel to the central axis and which are arranged at a pitch of 15 mm in a radial direction of the railway wheel from an inner peripheral surface (22) of the through hole, and by a plurality of radial line segments (L2) which are perpendicular to the central axis and which are arranged at a pitch of 15 mm in the central axis direction from a surface (23, 24) of the hub part that is a surface in which an opening of the through hole is formed are defined as rectangular regions (P),
an average C concentration in each rectangular region (P) in the cross section of the hub part is less than 0.90% by mass.

2. The railway wheel according to claim 1, containing one or more elements selected from the group consisting of:
Al: 0.001 to 0.500%,
Cu: 0.01 to 0.50%,
Ni: 0.01 to 0.50%,
Cr: 0.01 to 0.50%,
V: 0.01 to 0.12%,
Ti: 0.001 to 0.010%,
Mo: 0.01 to 0.20%, and
Nb: 0.010 to 0.050%.

## Patentansprüche

1. Schienenfahrzeugrad (1), umfassend:
einen Radkranzteil (4),
einen Nabenteil (2) mit einem Durchgangsloch (21), und
einen Stegteil (3), der zwischen dem Radkranzteil und dem Nabenteil angeordnet ist und mit dem Radkranzteil und dem Nabenteil verbunden ist,
wobei eine chemische Zusammensetzung des Schienenfahrzeugrades aus Folgendem besteht, in Masse-%
C: 0,60 bis 0,80%,
Si: 1,00% oder weniger,
Mn: 0,10 bis 1,50%,
P: 0,050% oder weniger,
S: 0,030% oder weniger,
N: 0,0200% oder weniger,
Al: 0 bis 0,500%,
Cu: 0 bis 0,50%,
Ni: 0 bis 0,50%,
Cr: 0 bis 0,50%,
V: 0 bis 0,12%,
Ti: 0 bis 0,010%,
Mo: 0 bis 0,20%, und
Nb: 0 bis 0,050%, wobei
der Rest aus Fe und Verunreinigungen besteht,
und **dadurch gekennzeichnet, dass**
in einem Querschnitt des Nabenteils, der erhalten wird, wenn der Nabenteil in einer Mittelachsenrichtung des Durchgangslochs entlang einer Ebene geschnitten wird, die die Mittelachse einschließt,
wenn Bereiche von 15 mm × 15 mm, die durch eine Vielzahl von axialen Liniensegmenten (L1), welche parallel zur Mittelachse sind und welche in einem Teilungsabstand von 15 mm in einer radialen Richtung des Schienenfahrzeugrades von einer inneren Umfangsfläche (22) des Durchgangslochs angeordnet sind, und durch eine Vielzahl von radialen Liniensegmenten (L2), welche senkrecht zur Mittelachse sind und welche in einem Abstand von 15 mm in der Mittelachsenrichtung von einer Oberfläche (23, 24) des Nabenteils angeordnet sind, die eine Oberfläche ist, in der eine Öffnung des Durchgangslochs ausgebildet ist, definiert sind, als rechteckige Bereiche (P) definiert werden,
eine durchschnittliche C-Konzentration in jedem rechteckigen Bereich (P) im Querschnitt des Nabenteils weniger als 0,90 Masse-% beträgt.

2. Schienenfahrzeugrad nach Anspruch 1, enthaltend eines oder mehrere Elemente, ausgewählt aus der Gruppe bestehend aus:
Al: 0,001 bis 0,500%,
Cu: 0,01 bis 0,50%,
Ni: 0,01 bis 0,50%,
Cr: 0,01 bis 0,50%,
V: 0,01 bis 0,12%,
Ti: 0,001 bis 0,010%,
Mo: 0,01 bis 0,20%, und
Nb: 0,010 bis 0,050%.

## Revendications

1. Roue ferroviaire (1), comprenant:
une partie bandage (4),
une partie moyeu (2) ayant un trou traversant (21), et
une partie âme (3) qui est disposée entre la partie bandage et la partie moyeu, et est reliée à la partie bandage et à la partie moyeu,
une composition chimique de la roue ferroviaire consiste en, en % en masse,
C: 0,60 à 0,80 %,
Si: 1,00 % ou moins,
Mn: 0,10 à 1,50 %,
P: 0,050 % ou moins,
S: 0,030 % ou moins,
N: 0,0200 % ou moins,
Al: 0 à 0,500 %,
Cu: 0 à 0,50 %,
Ni: 0 à 0,50 %,
Cr: 0 à 0,50 %,
V: 0 à 0,12 %,
Ti: 0 à 0,010 %,
Mo: 0 à 0,20 %, et
Nb: 0 à 0,050 %,
le reste étant Fe et des impuretés,
et **caractérisée en ce que**
dans une section transversale de la partie moyeu obtenue lorsque, dans une direction de l'axe central du trou traversant, la partie moyeu est coupée selon un plan qui inclut l'axe central,
lorsque des régions de 15 mm x 15 mm définies par une pluralité de segments de droite axiaux (L1) qui sont parallèles à l'axe central et qui sont disposés à un pas de 15 mm dans une direction radiale de la roue ferroviaire depuis une surface périphérique interne (22) du trou traversant, et par une pluralité de segments de droite radiaux (L2) qui sont perpendiculaires à l'axe central et qui sont disposés à un pas de 15 mm dans la direction de l'axe central depuis une surface (23, 24) de la partie moyeu qui est une surface dans laquelle une ouverture du trou traversant est formée sont définies comme des régions rectangulaires (P),
une concentration en C moyenne dans chaque région rectangulaire (P) dans la section transversale de la partie moyeu est inférieure à 0,90 % en masse.

2. Roue ferroviaire selon la revendication 1, contenant un ou plusieurs éléments choisis dans le groupe consistant en:
Al: 0,001 à 0,500 %,
Cu: 0,01 à 0,50 %,
Ni: 0,01 à 0,50 %,
Cr: 0,01 à 0,50 %,
V: 0,01 à 0,12 %,
Ti: 0,001 à 0,010 %,
Mo: 0,01 à 0,20 %, et
Nb: 0,010 à 0,050 %.
